# EUROPEAN PATENT APPLICATION

(11) **EP 4 446 912 A1**
(43) Date of publication of application: **16.10.2024**
(21) Application number: 23168128.9
(22) Date of filing: 14.04.2023
(51) Int. Cl.: G06F 21/10, G06F 21/41, G06F 21/62

(54) **CONTROLLING AUTHORIZATION THROUGH LICENSING AND POLICY ENFORCEMENT OF ATTRIBUTES**

(71) Applicant: THALES DIS CPL USA, INC., Austin, TX 78759 (US); THALES DIS ISRAEL LTD, 49511 Petach Tikva (IL)
(72) Inventor: KAKKIRALA, Lakshmana, 500015 Secunderabad (IN); GARG, Abhinav, 281004 Uttar Pradesh (IN); ZUNKE, Michael, 85551 KIRCHHEIM (DE)
(74) Representative: Lotaut, Yacine Diaw

(57) **Abstract**

Provided is a system (100) and method (200) for software monetization within an Identity and Access Management (IAM) ecosystem. An Identity Provider (121) is integrated with a License Server (131), such that when a request arrives (201), it checks for authentication (202), and if the authentication is successful, incorporates (204) license information from the License Server into an Access Token (113), such that the reported use information serves to dynamically update a license state and feature availability of a concurrent license finally serving as real-time information for license models that require strict consistency with reduced propagation delay. The Licensed Application (102) uses the integrated Identity Provider to authorize the user's access to application modules as per the license information (400) in the Access Token (113). Other embodiments are disclosed.

## Description

### TECHNICAL FIELD

The present invention relates generally to identity and access management, and more particularly, to improvements on licensing and software monetization by way of access tokens.

### BACKGROUND

Identity and Access Management (IAM) is the security discipline that enables the right users to access the right resources at the right time for the right reasons. It is a framework of policies and technologies to ensure that these users have the appropriate access to technology resources. An IAM administrator can centrally manage permissions to control which resources a user can access. Within the IAM ecosystem, authentication and authorization are two vital and separate information security processes that administrators use to protect systems and information. Authentication verifies the identity of a user or service, and authorization determines their access rights.

Single sign-on (SSO) is one component of the IAM security discipline. It is an identification method and user authentication service that permits a user to use one set of login credentials, such as a username and password, to access multiple applications. SSO occurs when a user logs in to one application and is then signed in to other applications automatically, irrespective of the platform. SSO can be used by enterprises, small and midsize organizations, and individuals to ease the management of multiple credentials. Closely tied to SSO is multi-factor authentication (MFA), which provides a higher trust level of who the user is.

An Independent Software Vendor (ISV) makes and sells software products, for instance, an application that runs on a computing system such as a computer or mobile device, or a web application that runs on a server and a browser. Similarly, Independent Device Vendors (IDV) also use licensing for similar purposes. Should we mention here along with ISVs?These applications may leverage a third party SSO service for authenticating a user of their software product to ensure a user of a licensed software program holds any license. The SSO adds security, improves usability, and saves time and money because user identity management can be delegated to a trusted Identity Provider. Also, ISV's are in the business of software monetization-the act of adding value to ISV's software, and intellectual property therein, to gain revenue. Accordingly, the application may also contain selectively enabled software features from which the ISV desires to expose and derive value.

However, the exposition of certain software features is usually dependent on a software license associated with the application, and that license is untethered to the SSO or Identify Provider. Moreover, the SSO, IdP and license managers each have their own sets of libraries, attachments and dependencies affecting their DevOps process and software lifecycle which compromises portability and ease of connectivity in the IAM ecosystem. This overhead not only places a burden on users when using the application, but also on the developers and ISV originating and maintaining the application, since they need to separately handle libraries, function calls, dependencies and aspects of SSO, IdP and licensing.

Accordingly, a need for a more practical, and software monetization oriented solution, is contemplated that addresses the needs of the user and the developers of the application. All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a system for software monetization within an Identity and Access Management (IAM) ecosystem is provided. The system comprises a Client, a Licensed Application, an Identity Provider and a License Server. The Identity Provider can produce an Access Token responsive to a request from the Licensed Application. The License Server contains license information related to authorized use of the Licensed Application by the user. The Identity Provider controls authorized use of the Licensed Application through licensing in a Single Sign On (SSO) architecture by adding the license information to the Access Token. The licensing information added to the access token also helps application developer use existing libraries to authenticate and monetize the application.

In some embodiments, the Licensed Application includes software features that are licensed and updated in real-time according to the license information. In some embodiments, the Access Token is a JSON Web Token (JWT) providing a scope extension for temporary or contextual authorization between the Identity Provider and License Server. In some embodiments, the Access Token is a Security Assertion Markup Language (SAML) transaction to exchange authentication and authorization data between the Identity Provider and License Server.

In some embodiments, the Access Token contains information on where to retrieve real time licensed feature information. As one example, the access token may specify a Uniform Resource Indicator (URI) to check for a real time state of a licensed feature. This URI is served by a license manager to provide real time information on the license status. The URI addresses edge cases on licensed features where volatile information on that license state is uncertain, for example, triggering on certain changes of events, for example, determining when a license can be used by a specific user, whether a user has crossed a time zone boundary, whether a license has lapsed or expired, policy enforcement on a priority, and according to a temporary user role for that licensed feature. Inclusion of this attribute in the access token is relevant to licenses that limit the number of concurrent sessions, limit number of users, or limit the allocated bandwidth. Whereas, in most authentication tokens, the attribute in the Access Token reports an availability of a software feature as a yes or no, here the access token specifies a URI to check for the real time state of a licensable feature, and where the URI is served by a License Manager and to provide real time information regarding user role license status, priority and policy enforcement, for example, on attributes in an access token related to license information.

In some embodiments, a user role information is embedded as an attribute in the Access Token to extend authorization rules, such that the Licensed Application in view of a policy enforces a priority on a user role with respect to features of the Licensed Application, for example, according to the user role information. In some system and method embodiments, a temporary user role is defined at a License Server that then pushes the Access Token to the licensed application. The License Server embeds the user role information into the Access Token such that the Licensed Application can reach it. In terms of the policy enforcement, a priority is assigned to the user role attribute. In this manner, the Licensed Application reaches out to the IDP server to help that particular application know and prioritize if there are two user roles which have a similar attributes but have a different meaning to it. Here, the priority is something that the policy enforcement considers for the application.

In some embodiments the License Server embeds the user role information as the attribute in the Access Token with a fixed priority, and pushes the Access Token to the Licensed Application, such that when the Licensed Application fetches updated license information from the Access Token it can selectively override the user role information accordingly without reference to the policy. With a fixed priority, everything stays the same, like the temporary user role. Or if the License Server wants to elevate the user role, that information and priority gets added into the Access Token as an attribute. But here, because the priority is fixed, the system will already know there is nothing else that that can be changed. Accordingly, the Licensed Application will automatically know from this attribute whenever it has a higher priority, and whether it needs to override whatever is there already in the attribute, for example, the user role. Here, upon the License Server embedding the user role attribute in the Access Token, the IdP can then push that user role to the Licensed Application.

In some embodiments, the Licensed Application retrieves from the Access Token the license information related to the valid license; and configures an availability of user features of the Licensed Application according to terms and conditions of the license information and in view of a policy enforces a user role on said availability. The License Server has information about a feature of the Licensed Application, for example, whether its allowed to be used, how it is to be used, at what times it may be used and how often, as well as concurrent use and so on. Whereas a license generally includes terms of use for features, here, the terms instead control a role (e.g. a user role), and the terms identify how this role should be available to the user in their role based on the license terms. Here these terms for the user role are embedded in the Access Token which then allows the IdP, or another authorization server, to pick up and retrieve this information from the Access Token, and which thereafter travels to the Licensed Application. Additionally, a policy may establish or determine an override of these license terms, for example, when the License Server, or another authorization server, defines an attribute of a user role. In view of the policy, the Licensed Application, or others in the path such as the IdP, can enforce license terms for the user role, for example, if it is fixed.

In some embodiments, the Identity Provider is integrated with the License Server such that responsive to the request from the Licensed Application, the Identity Provider authenticates the user on the Licensed Application, and passes the request to the License Server upon successful authentication. The License Server checks for a valid license for that user, and sends license information related to the valid license back to the Identity Provider. The Identify Provider incorporates the license information related to the valid license into the Access Token, and sends the Access Token to the Licensed Application.

In some embodiments, Licensed Application retrieves from the Access Token the license information related to the valid license, and configures user features of the Licensed Application according to terms and conditions of the license information. The integration of the License Server with the Identity Provider controls user access to the user features of the Licensed Application by way of the added license information in the access token. In some embodiments, the integration of the License Server with the Identity Provider configures the Access Token life per user to provide user-based authorization. In some embodiments, integration of the License Server with the Identity Provider provides for automatically embedding user-based and feature-based authorization into the Access Token.

In some embodiments, the system further comprises an Independent Software Vendor (ISV) that deploys the Licensed Application, wherein the Licensed Application reports back to the ISV the license information retrieved from the Access Token related to the valid license, and reports back a use of the Licensed Application by the user. In some embodiments, the License Server fetches updated license information relevant to session expiration and updates the Access Token accordingly.

In some embodiments, a method for software monetization within an Identity and Access Management (IAM) ecosystem is provided. The method comprises the steps of implementing software features into a Licensed Application, by way of an Independent Software Vendor (ISV), adding license information to an Access Token and producing the Access Token responsive to a request from the Licensed Application, by way of an integrated Identity Provider and License Server, and controlling authorized use of the Licensed Application through licensing in a Single Sign On (SSO) architecture, by way of the license information added into, and retrieved from, the Access Token, wherein said License Server contains the license information related to authorized use of the Licensed Application by the user and access to said software features.

In some embodiments, the method includes enabling and disabling, or activating and de-activating, the software features according to the license information. In some embodiments, the Identity Provider is integrated with the License Server such that responsive to the request from the Licensed Application, the Identity Provider checks for authentication of the user on the Licensed Application, and passes the request to the License Server upon successful authentication. In some embodiments, the License Server checks for a valid license for that user; and sends back to the the Identity Provider license information related to the valid license. In some embodiments, the Identity Provider integrates the license information related to the valid license into the Access Token, and sends the Access Token to the Licensed Application.

In some embodiments, the Licensed Application retrieves from the Access Token the license information related to the valid license; and configures user features of the Licensed Application according to terms and conditions of the license information, whereby the integration of the License Server with the Identity Provider configures the Access Token for authorization and controlling of user access to the user features of the Licensed Application.

In some embodiments, an Independent Software Vendor (ISV) deploys the Licensed Application, wherein the Licensed Application reports back to the ISV the license information retrieved from the Access Token related to the valid license, and reports back a use of the Licensed Application by the user. In some embodiments, the License Server fetches updated license information on session expiration and updates the Access Token accordingly.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG. 1** illustrates a system for software monetization within an Identity and Access Management (IAM) ecosystem in accordance with one embodiment;
**FIG. 2** depicts a method for controlling authorization through licensing by way of the SSO architecture of system shown in FIG. 1 extended to support real time licenses shown in FIG. 1;
**FIG. 3** depicts an environment providing telecommunication services in an IAM ecosystem supporting Single Sign-On (SSO) licensing in accordance with one embodiment; and
**FIG 4** depicts a model for dynamic licensing in the IAM ecosystem using exemplary licensing information within the access token.

Specific embodiments in this invention have been shown by way of example in the foregoing drawings and are hereinafter described in detail. The figures and written description are not intended to limit the scope of the inventive concepts in any manner.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

In a typical IAM ecosystem, SSO and software licensing act as two separate and distinct entities, each with their own problem to solve. The SSO service tries to solve the authentication problem associated with IAM. The License Server service tries to solve the authorization problem for features of the application that have been licensed. This is because, for example, authorizations regarding other concerns are handled by the Access Token independently of the license server. As an example, an ISV of a software licensed product deploys an application protected by the License Server, and that licensed application interacts only with Identity Providers for authentication. However, a separate solution is required for authorizing and controlling access to license features of the protected application exposed to the user. Here too, the user is burdened with an IAM ecosystem that is not easily portable and requires separate solutions to control usage of features and license terms of the protected application.

One technical problem of the current IAM ecosystem is that Single Sign On (SSO) is primarily used for authentication. Another is that SSO does not automatically configurable user or feature-based authorization, let alone, provide mechanisms to incorporate that capability. Moreover, in current state of the art, the life span of an SSO access token is not configurable per user. In view of these technical problems, and to better addresses the needs of the user and the developers of the application, herein provided is a system and method for controlling authorization through licensing in a Single Sign On (SSO) architecture.

Herein contemplated is a method to deliver and distributes the best and most up to date information known about the license to the application, where such information is embedded and immediately available to the application by way of a dynamic access token. That is, the dynamic access token includes, and is used to distribute, the most relevant information about the license, including user roles, priorities and policy enforcement, interpreted by the licensed application in real-time. The access token contains information, not only about which features are available, but a state of availability of the feature in real-time, to ensure, and check, that this feature is available to the user on receipt of the access token. In this way, the access token is a highly dynamic reporting agent to provide latency free access to license information by the licensed application. Only for license types, that are highly dynamic, the Access Token will contain the information, that in principle, the feature is available, but this license type requires a real time check, if it is really available at this very point in time. Also, by way of this dynamic access token, no remote calls through an authorization server or other agent is required. Rather, an attribute in the Access Token specifies a URI to check for a real-time state of a license feature of the Licensed Application, and once it has the URI it performs a remote call to get and refresh license details, to reduce latency access to license information. This method herein merges authorizations from a licensing system into an IAM infrastructure that already addresses its own security concerns and transport mechanisms for authorizations in a seamless way for the ISV and developer of the Licensed Application.

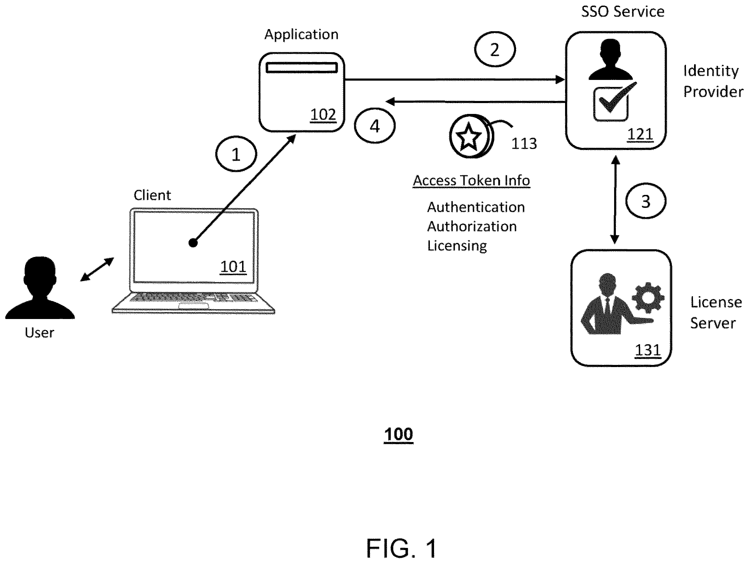

**FIG. 1** illustrates a system **100** for software monetization within an Identity and Access Management (IAM) ecosystem in accordance with one embodiment. The system comprises a Client **101** executing a Licensed Application **102,** an Identity Provider (IdP) **121,** and a License Server **131.** In some embodiments, the Client **101** is a computational device such as a computer or mobile device. It may include an operating system (OS) or browser for running the Licensed Application **102,** which may a native app executing on the OS or a web app delivered over the browser. Licensing information is added to the Identity Provider Access Token **113,** which helps application developers to use existing libraries to authenticate and monetize the Licensed Application **102.**

The Identity Provider **121** (IdP) is integrated, and communicating with, the License Server **131.** When a request arrives to the Identity Provider **121** (IdP), it checks for authentication, and if the authentication is successful, it integrates the license information from license server into the Access Token **113.** The IdP thereafter sends back the Access Token **113** containing the license information back to the Licensed Application **102.** The Licensed Application **102** uses the IdP to authorize the user's access to application modules as per the license information in the Access Token **113.**

Briefly, the Identity Provider **121** (IdP) is a service that creates, stores and manages digital identities. It provides the user or their internet-connected device authentication with a single set of login credentials. This ensures to other entities that the user is who they claim to be; it supports assertion message types: authentication, attribution and authorization. In other arrangements, the Identity Provider **121** may even authenticate the client **101** and/or Licensed Application **102.** The Identity Provider **121** can communicate with other entities and other web service providers via Security Assertion Markup Language (SAML), or data formats like Open ID Connect (OIDC) or Open Authorization (Oauth2). Oauth2 allows users to grant websites or applications access to their information on other websites but without giving them the passwords.

The License Server **131** is a centralized computer software system that provides access tokens, keys, licenses or information about available licenses to client computers in order to enable licensed software to run on the Client **101.** It allows an ISV to manage their software licenses and to ensure users, entities and machines only use the software or programs they are entitled to use. Software on the license server **131** manages encrypted files that contain lists of licenses available to customers among other content. License types include floating/fixed licenses, network named, or named user/host, and token licenses. Entities within the IAM ecosystem can communicate with the license server **131** to inquire and/or retrieve license information as necessary to run the application on the client. The license server grants or denies access to certain features of the Licensed Application **102.** The License Server **131** can run as a Cloud service as part of a Licensing Software platform, or in some cases may be run within an end-customer's infrastructure as an on-premise license server.

The Licensed Application **102** includes software features that are licensed according to license information. The license information is accessible via the License Server **131.** It establishes which features are enabled/activated and disabled/de-activated. The Identity Provider **121** is communicatively coupled to the Licensed Application **102** through the Client 101 and produces an Access Token responsive to a request from the Licensed Application **102.** This request serves to both authenticate and authorize a user running the Licensed Application **102.** The License Server **131** is communicatively coupled to the Identity Provider **121** and contains license information related to authorized use of the Licensed Application **102** by the user. In the configuration shown, the Identity Provider **101** controls authorized use of the Licensed Application **102** through licensing in a Single Sign On (SSO) architecture that adds the license information to the Access Token in response to the request.

One notable and inventive aspect of the system **100** is the integration of the Identify Provider (IdP) **121** with the License Server **131.** The integrated IdP **121/131** adds licensing information from the Licensing Server **131** to the access token produced by the Identify Provider. By way of this integrated IdP, the Licensed Application **102** authorizes the user to access application modules as per the license information in the access token. The SSO architecture of this integrated approach produces of an access token with licensing information, which allows for pluggable IdPs and for the servicing and software monetization of any ISV application. This integrated IdP approach enables automatic configurable authorization per user and/or per machine, and enabled IdP's to configure a per user session token. In a further advanced embodiment, the IdP requests the license information from the license manager that is *specific* to the respective application. This license information can be presented in attributes of the access token. Thus, in a multi-application service environment, the License Management system may be specifically chosen for the specific application service.

Moreover, implementation of this SSO architecture in the application **102** produces a license agnostic solution. That is, neither the developers nor the applications they build, need knowledge of the licensing details to solve the aforementioned problems; namely, the IdP **121** needing to solve the authentication problem, and the License Server **131** needing to solve the authorization problem. Here, the integrated IdP **121/131** automatically configures access tokens with licensing information for user/feature based authorization. Furthermore, inclusion of the licensing information in the access token benefits ISV developers because it facilitates their use of existing libraries to authenticate and monetize their applications. That is, existing libraries can be used in their applications without licensing specific API's and therefore reducing the effort to learn new APIs

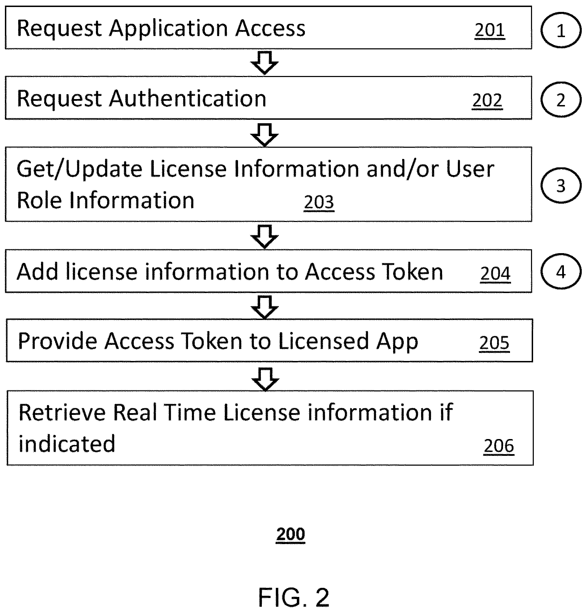

**FIG. 2** depicts a method **200** for controlling authorization through licensing by way of the SSO architecture of system **100** as shown in FIG. 1. The method 200 may include more or less than the number of steps shown, and may be practiced by components shown in FIG. 1, but is not limited to only these method steps or those components shown. Reference will be made to the components of FIG. 1 when describing the method steps, but is not limited to only those components shown.

The method **200** can begin at step **201** at which time a user first opens, or runs, the Licensed Application **102** on the client **101.** The application detects user access and checks whether the user has a license to run the application before it opens. In other cases, the user may already be interacting with the running Licensed Application 102 and invoke a licensed feature that has not been activated/enabled, or possibly, has expired, or been updated. In either case, the application determines that a user is seeking access of some type. It responds in real time, even as license information is independently updated.

At step **202** the licensed application **102** generates an authentication request and sends it to the IdP **121.** As one example, the License Application **121** builds an authentication URL, directs the URL to the IdP **121** which provides SSO services, and the SSO presents a log-in page whereby the user is authenticated and verified in via standard operating procedures. If the application is stand alone, it may communicate with the IdP **121** over a back-end channel to the IP servicing address, or, if the application is running in the user's browser, it may communicate over a front-end channel to the IP servicing address.

In one arrangement, the authentication step may be performed using Open ID Connect (OIDC), REST API authentication, HTTP authentication, or other frameworks. OIDC provides a common format for exchanging user authentication information between authentication services and websites. It is an extension of OAuth2 that focuses on user authentication rather than user authorization. OIDC provides specifications for the SSO service as seen in FIG. 1, which provides for strong user authentication of the Licensed Application **102.** Once OIDC authenticates the user, the workflow of the following methods may use OAuth2, for example.

At step **203** the IdP **121** communicates with the License Server **131** to get, or update, the license information for the user's Licensed Application **102.** This step can include pushing user role changes along with, or independently of, the license information. The user role changes may include alternative privileges or access rights. During this step, the IdP **121** creates the access token and adds license information into it related to the Licensed Application **102** and the user. These details may include, but are not limited to, a unique customer identification (ID), machine name, and authorization access scope. The parts of the access token work together to verify the user's right to access features of the application in accordance with terms and conditions of their license. Distinguishing elements of the access token include the header, the payload and a signature. The header contains information about the token's type and the algorithm used to make it. The payload includes information about the user, including permissions and expirations, which may be expressed as claim attributes. The license information is added and included within the payload. The signature provides for verification of data within the access token, and so that its recipient can ensure the integrity and authenticity of the token.

During step **203,** and depending on the configuration, the authorization services (to be distinguished from the previous authentication services) may be provided i) directly by the IdP **121** connected to the License Server **131,** ii) indirectly by an external authorization server connected to the License Server **131,** or iii) directly by the License Server **131** acting as an authorization server for the IdP. Here, for constructive implementation, the OAuth2 protocol is contemplated as one example framework to continue the request/response workflow. Here, depending on the configuration, an authorization URL for expressing authorization services may be constructed and directed to a service, for example, offered by the License Server or a 3^{rd} party Authorization Server. The URL will contain the necessary parameters depending on the grant type, for example, client ID, redirect URL, scope, state, etc.

Notably, in some embodiments, the IdP **121** is directly connected with the License Server **131,** which feeds the license information via a push and pull API to the IdP **121.** In the pull mode, the IdP requests the information from the License Server. In the push mode, the License Server sends the license information to the IdP as it becomes available. In some embodiments, the License Server **131** is connected to any Authorization server, which is feeding license and authorization info to the IDP via push and pull modes. In some embodiments, the License Server **131** is connected to a SAML authorization server, which is feeding license and authorization info to the IDP via push and pull modes. In some embodiments, the License Server **131** acts as an authorization server for the IDP. In all the above embodiments, the License Server **131** updates authorization records of the IDP and an authorization server any time license data changes. License change triggers include the crossing of a time zone boundary, for example, when a user is running an application in a different time zone, or a book keeping related to a report, for example, when updates to the license record are made. In the former, for example, while a user is executing the application, it checks for time boundary crossings, and may tabulate the number of crossings. This number may deplete the license if it exceeds a certain threshold, for instance, how many times the license update is reported. In certain cases, the licensed application will count the occurrences and prevent the user from further application use or enforce another restriction or use limitation. In this manner, the license manager may check, monitor and observe concurrency uses of the licensed application in real-time and control feature availability.

At step **205** the IdP **121** provides the access token to the Licensed Application **102** with the license information contained in the access token. Advantageously, the Licensed Application **102** has received both i) the authentication information for the user, and ii) the license information for configuring app usability specific to that user over one connection and with a single access token, responsive to a single request. That is, all aspects of authentication, authorizing and licensing were consolidated into one response/request workflow call. Notably, the Licensed Application **102** did not need to independently go through a series of sequential workflow calls (request/response pairs) to each of the IdP **121** and License Sever **131** or an authorization server. The Licensed Application **102** did not need to first authenticate with the IdP **121** to obtain an identity Token over a first connection (between app and IdP entity), and then use that Identity Token on a second connection (between app and License Sever) to obtain license information, in order to render use and features of the Licensed Application **102.**

At step **206,** real-time license information is retrived as indicated in the Access Token, which contains information where to retrieve real time licensed feature information, and which may limit the number of concurrent sessions, number of users, or bandwidth. This information, contained within attributes, although relevant to utility or use of a licensed feature, furthermore specifies a URI that allows the receiving entity to check for a real-time status, or state, of the feature, in particular, licensed use of that feature. Futhermore, depending on additional attributes specifying for example, a temporary user role, priorities and information relevant to policy enforcement, the receiving entity upon receiving the Access Token can perform obligations according to those attributes. This also allows concurrency observations by the license manager, wherein such information can also provide instruction where to report use of the relevant feature thereby allowing accurate real time license usage status being available at the License Server **131** or license manager. This additional step 206 is not necessary if no real time license information is required, for instance, where a delayed update of license information through the means of a normal update of the Access Token is sufficient. The additional licensing information in the access token improves portability across the IAM ecosystem, and helps application developers of an ISV advantage use of existing libraries to authenticate and monetize their applications.

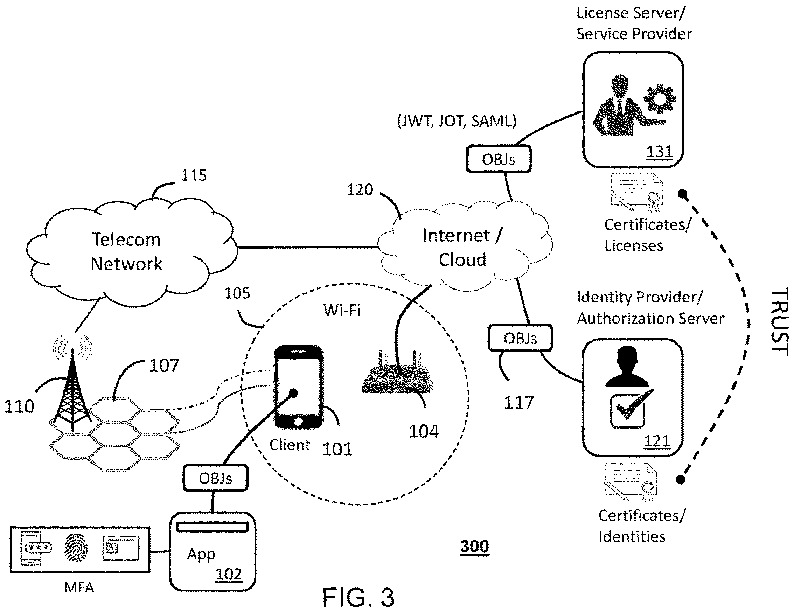

**FIG. 3** is a further representation of the block diagram of **FIG 1** in an environment providing telecommunication, Internet and cloud services in accordance with one embodiment. It depicts an exemplary communication environment **300** for performing software monetization within the Identity and Access Management (IAM) ecosystem primarily by way of the Client **101,** Identity Provider **121** and License Server **131.**

The Licensed App **102** may be communicatively coupled to components and network devices in the communication environment **100** via an online or offline mode. In this embodiment, the app **102** by way of the Client **101** also provides and accepts multiple factor authentication (MFA), secure one-time passcode (OTP) generation, as well as single-tap push or pull authentication. Multi-factor Authentication (MFA) is an authentication method that requires the user to provide two or more verification factors to gain access to a resource. With MFA, a user is granted access only after successfully presenting several separate pieces of evidence to an authentication mechanism - usually from at least two of the following three categories: knowledge--something one knows such as a password or personal identification number (PIN), possession--something one has such as a cryptographic identification device, smart card or secure token, and inherence--biometrics such as fingerprints, iris, face, palm print, etc. The goal of MFA is to create a layered defense and make it more difficult for an unauthorized person to access a target such as a physical location, computing device, network or database.

The Client **101,** Identity Provider **121** and License Server **131** each include one or more processors and memory coupled to the one or more processors, wherein the memory includes computer instructions which when executed by the one or more processors causes the one or more processors to perform the method steps. They may be connected over the network to other machines via a network communication device interface. In a networked deployment, they may operate in the capacity of a standalone mobile device, a client user machine in server-client user network environment, or as a peer machine in a peer-to-peer, or distributed, network environment.

As shown, a trust relationship is a pre-requisite between the Identity Provider (IdP) **121** and License Server (LS) **131.** This trust is established by an enrollment and/or registration process, whereby these entities are configured to exchange, or are directly provided with, metadata. This explains in part how the entities are "integrated" together. And, depending on the configurations (i, ii, and iii ) as previously discussed above in method step **203,** this exchange of metadata, whereby each receives certificates and log information, defines the extent to which the entities are "integrated". Metadata contain various information like endpoints and supported services, but also public keys. These keys are used to sign messages between the two entities. For example, when the LS send messages to the IdP, LS signs with its private key and the IdP verifies with the public key in the LS metadata. And vise versa, When the IdP sends something, it signs it with its private key and the LS verifies it with the public key in the IdP metadata. This arrangement applies similarly when the LS interacts with a 3^{rd} party authorization server. This way each entity can trust that the message came from the expected sender.

Once the trust is established, the License Server (LS) **131** can externalize authentication of the Licensed Application **102** by integrating with the existing identity infrastructure of the Identity Provider **121.** This sharing, or federating, of the identities is achieved by way of the federated protocol using Security Assertion Markup Language (SAML). SAML is an open standard for exchanging authentication and authorization data between parties, in particular, between an identity provider and a service provider. Moreover, with SAML, the Identity Provider **121** can enable the single sign-on (SSO) experience with the License Server (LS) **131,** or vice versa. This provides for either IdP initiated or LS initiated SSO as seen by the Licensed Application **102.**

The Identity Provider **121,** License Server **131,** Client **101,** and Licensed Application 102 exchange token objects (OBJs) **117** across the network **300.** These objects can be in the format of a Java Web Token (JWT) or JSON Web Token (JOT). Usually this consists of three parts: a header, a payload body and signature. Inside the payload are claim assertion attributes, a sub-property attribute that is a unique identifier for a user, an audience attribute identifying who is the intended recipient to use ID Token, an issuer attribute which is the identify provider who created the token, and other pieces about the user.

In this disclosed invention, the Identity Provider **121** can also produce a custom Access Token, which combines aspects of the ID Token for user identify information plus licensing information. The Access Token is specifically constructed to provide a user with access to the Licensed Application 102 and its resources (e.g. features, files, database, or an API) based on the license. This Access Token may be similarly based on JWT and JOT, or custom composed using other text strings and formats. In other configurations, the objects **117** represent SAML transactions that use Extensible Mark-up Language (XML) for standardized communications and security assertions between the respective entities.

The communication environment **100** can include a telecommunication network **115** and an internet communication network (internet) **120.** The telecommunication network **115** can provide a mobile communication link via base receiver **110** for wireless connectivity of a mobile device **102** from one or more cells **107.** In one arrangement, the mobile device **102** can communicate over a Radio Frequency (RF) link with the base receiver **110** using a standard communication protocol such as legacy 2G (CDMA, GSM) and 3G, or LTE 4G and 5G. The base receiver **110,** in turn, can connect the mobile device **102** to the internet **120** over a packet switched link. The internet can support application services and application service layers to provide media or content to the mobile device **102.** By way of the communication environment **100,** the mobile device **102** can establish connections with a service provider **80** and identity provider **70** on the network and with other mobile devices to exchange information or to provide services such as audio, text messaging, media, audio, video, interactive applications, and the like. The service provider **80** can have access to a database that is stored locally or remotely and which can contain profile data. It can also host application services directly, or over the internet **120.**

The mobile device **102** can also connect to the internet over a Wi-Fi or WLAN 105. Wireless Local Access Networks (WLANs) provide wireless access to the mobile communication environment within a local geographical area. WLANs can also complement loading on a cellular system, so as to increase capacity. Wi-Fi is the wireless technology used to connect computers, tablets, smartphones and other devices to the internet. The mobile device **102** can send and receive data to the service provider **80,** identity provider **70** and other remote servers on the mobile communication environment. In one example, the mobile device **102** can send and receive audio, video, or other multimedia content from the database to these providers, for example, photos or licenses for identity proofing.

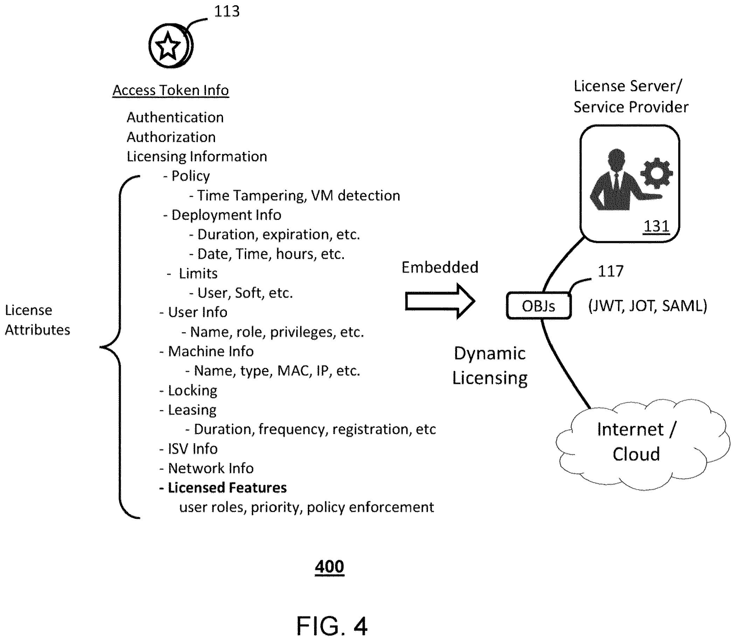

**FIG 4** depicts a model for dynamic licensing in the IAM ecosystem using exemplary licensing information within the access token **113.** As shown, the licensing information includes authentication info, authorization info and licensing info within which are all licensing attributes. The licensing content in the access token may contain more or less than the number of attributes shown, and is not limited to only these entries, which serve only as examples. The license attributes are the properties that control the specific behavior of an associated feature or module, such as being available at all, the maximum number of users who can run the software, the machines they can use the software on, and so on. Here for example, in the context of the Access Token, the licensing information may include attributes for the named users, the (max/min) number of users, and expiration times (e.g. date, time, hours, etc.), and so on. If for example a maximum concurrent use of a functionality is defined, the moment the limit is reached, no additional user are allowed to make use of this function. To allow concurrency observation by the license manager, the information also provides instruction where to report use of the relevant feature to, for example, directed to a URI, thereby allowing accurate real time license usage status being available at the license manager. Reported use information in the Access Token further serves to dynamically update a license state and feature availability of a concurrent license finally serving as real-time information for license models that require strict consistency with no propagation delay.

The integrated authentication and authorization workflow provides the dynamic mechanism for real-time updates and enforcement of license terms and conditions by way of the license attributes in the license information of the access token **113.** More particularly, the integration of the Identity Server and License Server enables workflow based dynamic licensing. Compared to typical authorizations, that do not change frequently, dynamic licenses can change any moment. With dynamic licensing, user names and application data can be dynamically assigned, or created on the fly, for example, by the ISV or systems administering the license terms and conditions. The deployment of a dynamic license however doesn't require ISV overhead; they need no modify the enabled application or its contents at all. Rather, and more favorably, user and application interaction is controlled in the license certificate thereby providing for the "dynamic" component of license management.

For example, within the workflow, and by way of the transaction objects (e.g. JWT, JOT, SAML), a session expiry method can be employed when these license attributes are present and detected. For instance, the Identity Provider in conjunction with the integrated License Server fetches from the license information, a short session expiry from updated license information, which allows a slow update of the license information. A License definition can be used to define session duration per user, since the lifetime of the access token provided may be influenced by information sitting in defined license terms. That is, because the longevity of the access token might depend on certain definitions of license terms, a session expiry attribute is set to manage its lifetime and account for minimal (or reduced) propagation delays associated with license changes, for example, an ISV updating the terms of the license and setting an expiry date.

The transaction objects **117** (e.g. JWT, JOT, SAML seen in FIG. 3) can also be extended to include a licensing attribute identifying a license state, such as, static or dynamic, and indicating to an object recipient that it needs to be checked in real-time by the License Server. Additional and optional attributes may be included in the transaction objects, for example, a "where to ask" URI for the License Server. For example, the license info in the Access Token will have an attribute which says that license is dynamic, and it needs to be checked in real-time by asking the License server. Optionally a direct URI for this request could be provided.

Still referring to FIG. 4, a few other license attributes are presented, which similarly can be incorporated, or embedded, into the transaction objects **117** (see FIG. 3) exchanged in the IAM ecosystem. The policy attribute specifies the choices made by the vendor regarding certain violations. Sub-attributes include time tampering and virtual machine (VM) detection. The concept of time-based licensing loses most of its relevance when an end user has the freedom to roll the system clock back to artificially extend the license duration. To safeguard against this, time tamper detection can be enabled in the license information. When enabled, if the system clock is rolled back beyond the defined tolerance period (24 hours, by default), then the licensed application returns an error. Also, virtual machine environments open up the possibility of license misuse either inadvertently or otherwise. To handle such scenarios, a policy can be enforced through the license to deny or allow application usage when a VM is detected on a machine.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A system (100) for software monetization within an Identity and Access Management (IAM) ecosystem, the system for performing operational steps comprising:
a Client (101) executing a Licensed Application (102);
an Identity Provider (121) communicatively coupled to the Licensed Application (102) through the Client (101), the Identity Provider producing an Access Token (113) responsive to a request from the Licensed Application (102); and
a License Server (131) communicatively coupled to the Identity Provider (121), the License Server containing license information (400) related to authorized use of the Licensed Application by the user,
wherein the access token (113) specifies a state of availability of software features in the Licensed Application that are updated in real-time,
wherein the Client (101), Identity Provider (121) and License Server (131) each include one or more processors and memory coupled to the one or more processors, wherein the memory includes computer instructions which when executed by the one or more processors causes the one or more processors to perform the operational steps.

2. The system of claim 1, wherein an attribute in the Access Token specifies a URI to check for a real-time state of a license feature of the Licensed Application, and once it has the URI it performs a remote call to get and refresh license details, to reduce latency access to license information.

3. The system of claim 2, wherein a user role information is embedded as an attribute in the Access Token to extend authorization rules, such that the Licensed Application in view of a policy enforces a priority on a user role with respect to features of the Licensed Application according to the user role information.

4. The system of claim 2, wherein the URI addresses licensed features where volatile information on that license state is uncertain, whereby it triggers when a license can be used by a specific user, whether a user has crossed a time zone boundary, whether a license has lapsed or expired, policy enforcement on a priority, and according to a temporary user role for that licensed feature.

5. The system of claim 1, wherein the Identity Provider is integrated with the License Server such that responsive to the request from the Licensed Application,
the Identity Provider:
checks for authentication of the user on the Licensed Application; and
passes the request to the License Server upon successful authentication,
the License Server:
checks for a valid license for that user; and
sends back to the Identity Provider license information related to the valid license;
the Identify Provider:
integrates the license information related to the valid license into the Access Token; and
sends the Access Token to the Licensed Application.

6. The system of claim 5, wherein the Licensed Application retrieves from the Access Token the license information related to the valid license; and configures an availability of user features of the Licensed Application according to terms and conditions of the license information and in view of a policy enforces a user role on said availability.

7. The system of claim 5, whereby the integration of the License Server with the Identity Provider provides user-based authorization and a configuring of an Access Token lifetime per user.

8. The system of claim 5, wherein the integration of the License Server with the Identity Provider automatically embeds user-based and feature-based authorization into the Access Token.

9. The system of claim 5, further comprising an Independent Software Vendor (ISV) or Independent Device Vendor (IDV) that deploys the Licensed Application, wherein the Licensed Application reports back to the ISV the license information retrieved from the Access Token related to the valid license, and reports back a use of the Licensed Application by the user,
such that reported use information serves to dynamically update a license state and feature availability of a concurrent license finally serving as real-time information for license models that require strict consistency with minimal propagation delay.

10. The system of claim 3, wherein the License Server embeds the user role information as the attribute in the Access Token with a fixed priority, and pushes the Access Token to the Licensed Application, such that when the Licensed Application fetches updated license information from the Access Token it overrides the user role information accordingly without reference to the policy.

11. A method (200) for software monetization within an Identity and Access Management (IAM) ecosystem, the method comprising the steps of:
implementing (203) software features into a Licensed Application, by way of an Independent Software Vendor (ISV) or Independent Device Vendor (IDV);
adding (204) license information related to the software features to an Access Token (113) and authenticating (202) the Access Token responsive to a request (201) from the Licensed Application, by way of an integrated Identity Provider (121) and License Server (131);
wherein the access token (113) specifies a state of availability of software features in the Licensed Application that are updated in real-time,
wherein said License Server (131) contains the license information (400) related to authorized use of the Licensed Application by the user and access to said software features.

12. The method of claim 11, wherein an attribute in the Access Token specifies a URI to check for a real-time state of a license feature of the Licensed Application, and once it has the URI it performs a remote call to get and refresh license details.

13. The method of claim 12, wherein a user role information is embedded as an attribute in the Access Token to extend authorization rules, such that the Licensed Application in view of a policy enforces a priority on a user role with respect to features of the Licensed Application according to the user role information.

14. The method of claim 11, wherein the Access Token is one of:
a Security Assertion Markup Language (SAML) transaction to exchange authentication and authorization data between the Identity Provider and License Server, or
a JSON Web Token (JWT) providing a scope extension for temporary or contextual authorization between the Identity Provider and License Server.

15. The method of claim 11, wherein the Identity Provider is integrated with the License Server such that responsive to the request from the Licensed Application,
the Identity Provider: checks for authentication of the user on the Licensed Application; and, passes the request to the License Server upon successful authentication,
the License Server: checks for a valid license for that user; and sends back to the Identity Provider license information related to the valid license;
the Identify Provider: integrates the license information related to the valid license into the Access Token, and sends the Access Token to the Licensed Application,
wherein the Licensed Application retrieves from the Access Token the license information related to the valid license; and configures an availability of user features of the Licensed Application according to terms and conditions of the license information and in view of a policy that enforces a user role on said availability
